# EUROPEAN PATENT SPECIFICATION

(11) **EP 1 819 604 B1**
(45) Date of publication and mention of the grant of the patent: **10.06.2009**
(21) Application number: 05797065.9
(22) Date of filing: 28.10.2005
(51) Int. Cl.: B65D 65/40, B32B 27/08, B65D 85/72, B32B 27/18, B65D 81/24

(54) **A PACKAGING LAMINATE FOR A RETORTABLE PACKAGING CONTAINER**
VERPACKUNGSLAMINAT FÜR AUTOKLAVENFESTEN VERPACKUNGSBEHÄLTER
STRATIFIE D'EMBALLAGE POUR RECIPIENT D'EMBALLAGE STERILISABLE

(30) Priority: 01.12.2004 SE 0402938
(43) Date of publication of application: 22.08.2007
(73) Proprietor: Tetra Laval Holdings & Finance SA, 1009 Pully (CH)
(72) Inventor: FLEMMER KARLSSON, Katarina, S-226 49 Lund (SE); ANDERSSON, Thorbjörn, S-247 36 Södra Sandby (SE); PETERSÉN, Kerstin, S-244 41 Kävlinge (SE)
(74) Representative: Sundell, Hakan Oskar Anders
(86) International application number: PCT/SE2005/001622
(87) International publication number: WO 2006/059938

(56) References cited:
- EP-A1- 0 318 771
- WO-A-02/28637
- WO-A1-03/035503
- US-A- 3 972 467
- US-A- 4 513 036
- US-A- 4 753 832
- US-A1- 2003 207 054
- US-A1- 2004 132 600

## Description

### TECHNICAL FIELD

The present invention relates to a packaging laminate for a retortable or hot fillable packaging container comprising a core or bulk layer of paper or paperboard, a first outer liquid-tight coating based on polypropylene on the inside of the packaging laminate, a second outer liquid-tight coating based on polypropylene on the outside of the packaging laminate, and an aluminium foil serving as gas barrier between the core layer and said first outer liquid-tight coating based on polypropylene. The present invention also relates to the packaging container proper, as well as to a method of its manufacture.

### BACKGKROUND ART

A packaging laminate of the type described above is previously known from, for example, international Patent Application carrying Publication Number WO97/02140. The prior art packaging laminate displays a rigid, but foldable core layer of paper or paperboard and outer liquid-tight coatings of moisture and heat-resistant plastic material on both sides of the core layer. In order to impart to the prior art packaging laminate tightness properties also against gases, in particular oxygen gas, the packaging laminate moreover displays an aluminium foil serving as gas barrier between the paper or paperboard layer and the one outer plastic coating.

From the prior art packaging laminate, retortable packaging containers are produced with the aid of conventional filling machines of the type which, from a web or from prefabricated blanks of the packaging material, form, fill and seal finished packages in accordance with the so-called form/fill/seal principle which is well-known in packaging contexts.

From, for example, a flat-folded tubular packaging blank of the prior art packaging laminate, retortable packaging containers are produced in that the packaging blank is first raised into an open, tubular packaging carton which is sealed at its one end by fold forming and thermosealing of continuous foldable end panels of the packaging carton for the formation of a substantially planar bottom seal. The packaging carton provided with the bottom is filled with the relevant contents, e.g. food, through its open end which is thereafter closed and sealed by additional fold forming and thermosealing of corresponding end panels of the packaging carton for the formation of a substantially planar top seal. Naturally, the top seal of the packaging carton may instead be formed first, in which event the filling operation is instead put into effect via the bottom. The filled and sealed, normally parallelepipedic packaging container is thereafter ready for a heat treatment in order to impart to the packed contents or food extended shelf-life in its unopened packaging container, such as a shelf-life of at least 6 months, often even longer, such as at least 12 or 18 months.

A heat treatment with a view to extending shelf-life may suitably be put into effect in the manner and under the conditions described in international Patent Application carrying Publication Number WO98/16431, which is hereby incorporated as reference. In such instance, the packaging container is placed in a retort and heated therein with the aid of a first gaseous medium, for example hot steam, flowing in contact with the outer walls of the packaging container, to a temperature generally within the range of between 70 and 130°C. After a predetermined stay-time at the selected temperature, the supply of the gaseous medium is discontinued. The packaging container is cooled using a second circulating gaseous medium, for example cold air, and finally with a circulating liquid medium, for example cold water. The cooled, retorted packaging container is thereafter removed from the retort for storage, transport and/or other handling.

One variation for such retorting is so-called hot fill which is particularly employed for acidic products. In such instance, a sterile filling of the product takes place at at least 80°C, but less than 100°C, whereafter retorting is not required.

Even if a packaging container of the prior art packaging laminate in normal cases withstands the rough heat treatment which is constituted by retorting, it nevertheless not seldom occurs that the aluminium foil incorporated as gas barrier during the reforming of the packaging laminate into packaging containers is subjected to such powerful tensile stresses that it cracks in particularly exposed areas of the packaging laminate. The occurrence of cracks in the stretch-sensitive aluminium foil entails that the packaging container to a corresponding degree loses tightness properties against gases which may thereby penetrate into the packaging container and come into contact with the packed product. The problem with undesirable penetration of gases through cracks occurring in the aluminium foil becomes particularly serious in those cases when the packed product is particularly sensitive to the action of gases, for example oxygen gas, which may very rapidly destroy the product and render it unusable. International Publication WO 03/035503 describes a solution to this problem according to which the packaging laminate, with a view to promoting gas tightness, includes an additional layer serving as a gas barrier between the core layer and the aluminium foil.

However, it has proved that other problems may arise in connection with the packing of acidic food products, such as food products containing or preserved in acetic acid or other acid, or food products which, during storage, release free fatty acids, which may particularly be the case for food products of the tomato family. Hereinafter, such compounds will be designated acidic compounds regardless of whether they relate to acids such as acetic acid or free fatty acids which are released from the food product. These acidic compounds have proved to be capable of penetrating the inside of the packaging laminate but not the aluminium foil. In such instance, they accumulate in a steadily increasing concentration adjacent the aluminium foil and, gradually during the long shelf-life which the packaging container nevertheless displays, have a negative effect on the bonding and adhesion between the aluminium foil and the liquid-tight inside coating based on polypropylene. In the worst case scenario, there is a risk that this bonding is released entirely so that the inside coating based on polypropylene forms a loose bag inside the packaging container.

EP 0 341 937 describes a packaging laminate in which an extra barrier layer of ethylene vinyl alcohol copolymer (EVOH) has been provided between an ordinary oxygen gas barrier of aluminium foil and an inner sealing layer of polyethylene. The purpose is stated to be to provide an additional barrier protection for the total container structure, but it is not disclosed that such an additional barrier layer could function against acidic compounds nor is there any disclosure or description of a packaging laminate for a retortable or hot fillable packaging container.

### BRIEF OUTLINE OF THE INVENTION

One object of the present invention is to obviate the above-outlined problems in association with the prior art packaging laminate.

A further object of the present invention is to provide a packaging laminate of the type described by way of introduction which may readily be reformed by fold forming and thermosealing into a retortable or hot fillable packaging container without the risk that the packaging container loses its desirable tightness properties against gases, in particular oxygen gas.

Yet a further object of the present invention is to realise a retortable or hot fillable packaging container produced from the packaging laminate for perishable or oxygen gas-sensitive food products, this packaging container retaining superior adhesion and bonding between its oxygen gas barrier of aluminium foil and the outer liquid-tight coating on the inside of the laminate, also during a lengthy period of storage with a content of a food product which contains, is preserved in or emits one or more acidic compounds.

These and other objects and advantages will be attained according to the present invention by means of a packaging laminate, a packaging container and a method in the production of the packaging container according to the appended Claims.

Hence, the present invention realises a packaging laminate for a retortable or hot fillable packaging container, the packaging laminate comprising a core layer of paper or paperboard, a first outer liquid-tight coating based on polypropylene on the inside of the packaging laminate, a second outer liquid-tight coating based on polypropylene on the outside of the packaging laminate, an aluminium foil serving as gas barrier between the core layer and said first outer liquid-tight coating based on polypropylene, there being provided, according to the present invention, a layer of polar polymer material serving as barrier against acidic compounds and disposed between the aluminium foil and said first outer liquid-tight coating based on polypropylene.

According to one aspect of the present invention, the layer serving as barrier against acidic compounds is selected from the group essentially comprising polyethylene terephthalate (PET), amorphous polyethylene terephthalate (APET), oriented polyethylene terephthalate (OPET), polyamide (PA), amorphous polyamide (APA), oriented polyamide (OPA), ethylene vinyl alcohol copolymer (EVOH), polyvinyl alcohol (PVOH) or combinations thereof. One such, particularly preferred, combination may be ethylene vinyl alcohol copolymer (EVOH) together with polyamide (PA). It is also conceivable that the layer serving as barrier against acidic compounds may include a scavenger for acidic compounds, such a compound which is rich in OH groups. The function of the layer serving as barrier against acidic compounds is that, during the shelf-life of the packaging container, it prevents, to a sufficient degree, acidic compounds from the food product from reaching the aluminium foil. As a result, a sufficiently good level of bonding and adhesion will be maintained between the aluminium foil and the outer liquid-tight coating based on polypropylene on the inside of the laminate.

The thickness of the layer serving as barrier to acidic compounds is suitably between 5 and 25 µm, preferably between 7 and 20 µm and even more preferably between 10 and 15 µm. Further, the layer serving as barrier against acidic compounds is preferably directly bonded to the aluminium foil via an interjacent tie layer of an adhesive such as, for example, an adhesion plastic. One particularly preferred adhesive according to the present invention is that which may be obtained from Mitsui, Japan, under the trade name Admer.

According to one aspect of the present invention, the first outer liquid-tight coating based on polypropylene on the inside of the packaging laminate displays a thickness of between 20 and 60 µm, preferably between 25 and 40 µm. The second outer liquid-tight coating based on polypropylene on the outside of the packaging laminate displays a thickness of between 30 and 50 µm, preferably between 33 and 45 µm.

According to one preferred embodiment of the present invention, there may be provided a third layer based on polypropylene between the core layer and the aluminium foil, this third layer based on polypropylene being preferably disposed direct against the core layer without any interjacent layer, and preferably displays a thickness of between 5 and 20 µm, and even more preferably between 8 and 16 µm.

According to one embodiment of the present invention, an additional layer serving as gas barrier is disposed between the core layer and the aluminium foil, this additional layer serving as gas barrier being directly bonded to said aluminium foil via an interjacent tie layer of an adhesive, for example an adhesion plastic such as Admer. This additional layer serving as gas barrier consists of a material selected among the group essentially comprising polyethylene terephthalate (PET), amorphous polyethylene terephthalate (APET), cyclic olefin copolymers (COC), polyamide (PA), polyamide copolymer (PA-copolymer) amorphous polyamide (APA), liquid crystalline polymers (LCP), ethylene vinyl alcohol copolymer (EVOH) and polyvinyl alcohol (PVOH) which may possibly be applied on a thin carrier layer, such as, for example, paper. Suitably, it displays a thickness of between 5 and 20 µm, preferably between 5 and 15 µm.

While a packaging container which is produced by fold forming and sealing of a conventional packaging laminate not seldom loses desirable tightness properties against gases, in particular oxygen gas, because of cracks which may occur in the aluminium foil when the packaging laminate is reformed into a packaging container, this risk is counteracted or effectively obviated by the layer employed as additional gas barrier between the core layer and the aluminium foil in this embodiment of the packaging laminate according to the present invention.

Where necessary, further tie layers of an adhesive, for example an adhesion plastic such as Admer, are provided between the different layers in the laminate.

All layers in the packaging laminate are of qualities which are particularly suitable for retorting or hot filling.

The present invention further realises a retortable or hot fillable packaging container for particularly perishable and oxygen gas-sensitive products produced by fold forming and sealing of the packaging laminate according to the present invention.

Further, the present invention realises a method, in the production of such a packaging container with contents consisting of a food, the packaging container displaying long shelf-life and such packaging container being treated by retorting.

According to one variation, the present invention realises a method, in the production of a packaging container with contents consisting of food, the packaging container displaying long shelf-life and in which the filling of food into the packaging container is carried out at at least 80°C but below 100°C, whereafter the packaging container is sealed.

### BRIEF DESCRIPTION OF THE ACCOMPANYING DRAWINGS

The present invention will now be described in greater detail hereinbelow, with reference to the preferred embodiment and with reference to the accompanying Drawings. In the accompanying Drawings:
Fig. 1 schematically illustrates the general structure of a packaging laminate for a retortable or hot fillable packaging container according to a first embodiment of the present invention; and
Fig. 2 schematically illustrates the general structure of a packaging laminate for a retortable or hot fillable packaging container according to a second embodiment of the present invention.

### DETAILED DESCRIPTION OF THE ACCOMPANYING DRAWINGS AND PREFERRED EMBODIMENTS

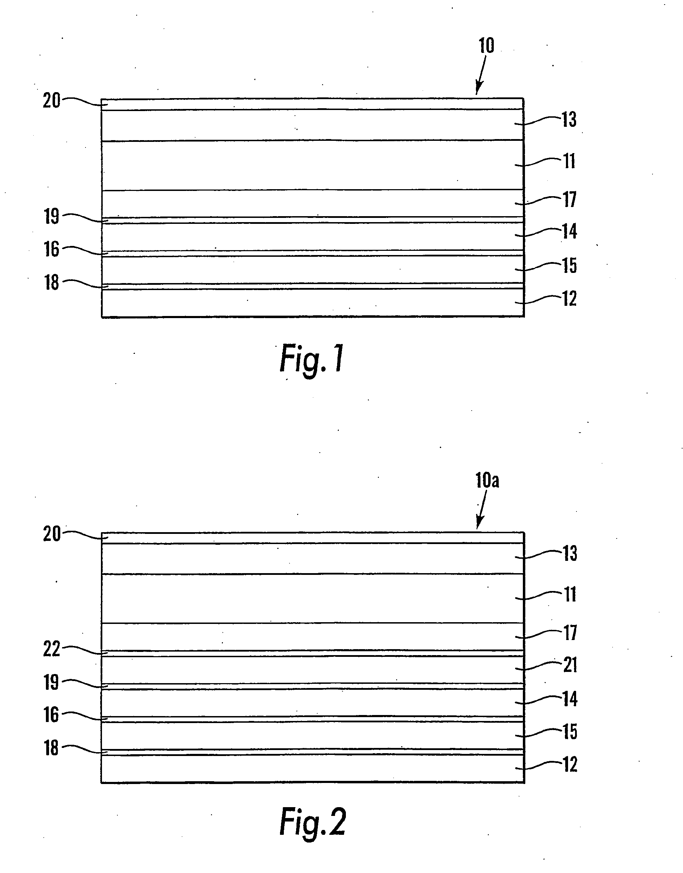

Fig. 1 shows the general structure of a packaging laminate according to the present invention carrying the generic reference numeral 10. The packaging laminate 10 has a rigid, but foldable core layer 11 of paper or paperboard, as well as outer liquid-tight coatings 12 and 13 based on polypropylene on both sides of the core layer 11. The packaging laminate 10 further displays an aluminium foil 14 serving as gas barrier and disposed between the core layer 11 and the one outer liquid-tight coating 12, i.e. the first outer liquid-tight coating 12 which will constitute the inside of the packaging container formed from the laminate and will be in direct contact with the food therein. A third layer 17 based on polypropylene is disposed between the core layer 11 and the gas barrier layer 14. According to the present invention, there is further provided a layer 15 serving as barrier against acidic compounds and consisting of polar polymer material, this layer 15 being disposed between the gas barrier layer 14 and said first outer liquid-tight coating 12 based on polypropylene.

The second outer liquid-tight coating 13 which will constitute the outside in the packaging container is a polypropylene based (PP) plastic. The liquid-tight coating 13 may, for example, consist of a physical or mechanical mixture of polypropylene (PP) and polyethylene (PE) which, in addition to superior tightness properties against liquid, also displays sufficient moisture and heat resistance to be able to withstand such extreme moisture and temperature stresses as occur in a normal heat treatment in a retort with a view to extending shelf-life. An outer coating 13 of a physical or mechanical mixture of polypropylene (PP) and polyethylene (PE) moreover displays good printability at the same time as making for mechanically strong and liquid-tight seals by thermosealing when the packaging laminate 10 is reformed into a retortable packaging container. The thickness of the outer liquid-tight coating 13 is generally of the order of magnitude of between 30 and 50 µm.

On the outside of the outer liquid-tight coating 13, there are provided printed artwork and a protective lacquer 20.

The first outer liquid-tight coating 12, which will constitute the inside of the packaging container, also consists of a polypropylene based plastic. Preferably, the liquid-tight coating 12 consists of a copolymer of propylene and ethylene which is sufficiently moisture- and heat resistant to withstand the extreme moisture- and temperature stresses which occur in a normal heat treatment in a retort with a view to extending shelf-life. A coating of a copolymer of propylene and ethylene moreover makes for mechanically strong and liquid-tight seals when the packaging laminate 10 is reformed into a packaging container for retorting purposes. The thickness of the outer plastic coating 12 is generally of the order of magnitude of between 20 and 60 µm.

The layer 17 also consists of a polypropylene based plastic. This layer is disposed in direct contact with the core layer 11 and, via a tie layer 19, bonds to the gas barrier layer 14 of aluminium foil. Typically, the layer 17 may display a thickness of between 5 and 20 µm.

Typically, the gas barrier layer of aluminium displays a thickness of between 6 and 12 µm.

The layer 15 of polar polymer material serving as barrier against acidic compounds according to the present invention is, possibly via a tie layer 16, directly bonded to the gas barrier layer 14 of aluminium, on its inside. It is also directly bonded to the first outer liquid-tight coating 12, via a tie layer 18. The layer 15 may consist of a material as described above, but in the preferred embodiment it consists of EVOH or a combination of EVOH and PA. In general, it displays a thickness of between 5 and 25 µm.

The packaging laminate 10a in Fig. 2 principally differs from the packaging laminate 10 in Fig. 1 in that it displays, between the aluminium foil 14 and the core layer 11 (or the third polypropylene based layer 17), an additional layer 21 serving as gas barrier in order to compensate for or counteract any possible cracks which may occur in the aluminium foil 14 when the packaging laminate 10a is reformed into a packaging container. A tie layer 22 is suitably provided between the additional layer 21 serving as gas barrier and the third polypropylene based layer 17. On its other side, the additional layer 21 serving as gas barrier directly bonds via the tie layer 19 to the gas barrier layer 14 of aluminium.

Preferred materials for the additional or supplementary gas barrier layer 21 in the packaging laminate 10a according to the present invention have been described above. Its thickness is generally of the order of magnitude of between 5 and 20 µm.

The packaging laminate according to the present invention may be produced in that the outside of the laminate, i.e. the layers 13 and 11, are laminated to the aluminium foil 14 by means of co-extrusion therebetween of the layers 17, possibly 22, possibly 21 and 19. The inside may thereafter be applied by extrusion, preferably co-extrusion, of the layers 16, 15, 18 and 12 on the inside of the gas barrier layer 14 of aluminium. Alternatively, the inside layers 16, 15, 18 and 12 have been prefabricated in the form of a film which is preferably laminated to the aluminium foil 14 in the same nip as the lamination of the outside 13, 11 to the aluminium foil 14, or alternatively in another nip.

From the packaging laminate 10, 10a, a retortable packaging container is produced in a per se known manner by fold forming and thermosealing of a sheet- or web shaped blank of the packaging laminate 10, 10a as described under the heading "Background art" above.

Naturally, the present invention is not restricted exclusively to the embodiments described and illustrated by way of example, numerous various alterations and modifications being possible without departing from the scope of the inventive concept as this is defined in the appended Claims.

## Claims

1. A packaging laminate for a retortable or hot fillable packaging container, the packaging laminate (10, 10a) comprising a core layer (11) of paper or paperboard, a first outer liquid-tight coating (12) based on polypropylene on the inside of the packaging laminate, a second outer liquid-tight coating 13 based on polypropylene on the outside of the packaging laminate, an aluminium foil (14) serving as gas barrier between the core layer (11) and said first outer liquid-tight coating (12) based on polypropylene, **characterised by** a layer (15) of polar polymer material serving as barrier against acidic compounds and disposed between the aluminium foil (14) and said first outer liquid-tight coating (12) based on polypropylene.

2. The packaging laminate as claimed in Claim 1, **characterised in that** the layer (15) serving as barrier against acidic compounds is chosen from the group essentially comprising polyethylene terephthalate (PET), amorphous polyethylene terephthalate (APET), oriented polyethylene terephthalate (OPET), polyamide (PA), polyamide copolymer (PA-copolymer), amorphous polyamide (APA), oriented polyamide (OPA), ethylene vinyl alcohol copolymer (EVOH), polyvinyl alcohol (PVOH) or combinations thereof.

3. The packaging laminate as claimed in Claim 1 or 2, **characterised in that** the layer (15) serving as barrier against acidic compounds includes a scavenger for acidic compounds.

4. The packaging laminate as claimed in any of the preceding Claims, **characterised in that** the thickness of the layer (15) serving as barrier against acidic compounds is between 5 and 25 µm, preferably between 7 and 20 µm and even more preferably between 10 and 15 µm.

5. The packaging laminate as claimed in any of the preceding Claims, **characterised in that** the layer (15) serving as barrier against acidic compounds is directly bonded to said aluminium foil (14) possibly via an interjacent tie layer (16).

6. The packaging laminate as claimed in any of the preceding Claims, **characterised in that** said first outer liquid-tight coating (12) based on polypropylene on the inside of the packaging laminate displays a thickness of between 20 and 60 µm, preferably between 25 and 40 µm.

7. The packaging laminate as claimed in any of the preceding Claims, **characterised in that** said second outer liquid-tight coating (13) based on polypropylene on the outside of the packaging laminate displays a thickness of between 30 and 50 µm, preferably between 33 and 45 µm.

8. The packaging laminate as claimed in any of the preceding Claims, **characterised by** a third layer (17) based on polypropylene between said core layer (11) and said aluminium foil (14), said third layer (17) based on polypropylene preferably being disposed direct against said core layer (11) and preferably displaying a thickness of between 5 and 20 µm, and even more preferably between 8 and 16 µm.

9. The packaging laminate as claimed in any of the preceding Claims, **characterised by** an additional layer (21) serving as gas barrier between the core layer (11) and the aluminium foil (14), said additional layer (21) serving as gas barrier being directly bonded to said aluminium foil (14) via an interjacent tie layer (19).

10. The packaging laminate as claimed in Claim 9, **characterised in that** said at least one additional layer (21) serving as gas barrier consists of a material selected from the group essentially comprising polyethylene terephthalate (PET), amorphous polyethylene terephthalate (APET), cyclic olefin copolymers (COC), polyamide (PA), amorphous polyamide (APA), liquid crystalline polymers (LCP), ethylene vinyl alcohol copolymer (EVOH) and polyvinyl alcohol (PVOH).

11. The packaging laminate as claimed in Claim 9, **characterised in that** the thickness of said at least one additional layer (21) serving as gas barrier is between 5 and 20 µm, preferably between 5 and 15 µm.

12. A packaging container, **characterised in that** it is fold formed from a packaging laminate (10, 10a) as claimed in any of the preceding Claims, filled with a food and sealed.

13. A method in the production of a packaging container with contents consisting of food, the packaging container displaying long shelf-life, **characterised in that** a packaging container as claimed in Claim 12 is treated by retorting.

14. A method in the production of a packaging container with contents consisting of food, the packaging container displaying extended shelf-life, **characterised in that** the filling of the food into a packaging container as claimed in Claim 12 is carried out at at least 80°C, but less than 100°C, whereafter the packaging container is sealed.

## Patentansprüche

1. Verpackungslaminat fur einen retortierbaren oder heiß befüllbaren Verpackungsbehälter, wobei das Verpackungslaminat (10, 10a) eine Kernschicht (11) aus Papier oder Pappe, eine erste äußere flüssigkeitsundurchlässige Beschichtung (12) auf Basis von Polypropylen auf der Innenseite des Verpackungslaminats, eine zweite äußere flüssigkeitsundurchlässige Beschichtung (13) auf Basis von Polypropylen auf der Außenseite des Verpackungslaminats, eine Aluminiumfolie (14), die als Gasbarriere zwischen der Kernschicht (11) und der ersten äußeren flüssigkeitsundurchlässigen Beschichtung (12) auf Basis von Polypropylen dient, umfaßt, **gekennzeichnet durch** eine Schicht (15) aus polarem Polymermaterial, das als Barriere gegen saure Verbindungen dient und zwischen der Aluminiumfolie (14) und der ersten äußeren flüssigkeitsundurchlässigen Beschichtung (12) auf Basis von Polypropylen angeordnet ist.

2. Verpackungslaminat nach Anspruch 1, **dadurch gekennzeichnet, daß** die als Barriere gegen saure Verbindungen dienende Schicht (15) aus der Gruppe, die im wesentlichen aus Polyethylenterephthalat (PET), amorphem Polyethylenterephthalat (APET), orientiertem Polyethylenterephthalat (OPET), Polyamid (PA), Polyamid-Copolymer (PA-Copolymer), amorphem Polyamid (APA), orientiertem Polyamid (OPA), Ethylen-Vinylalkohol-Copolymer (EVOH), Polyvinylalkohol (PVOH) oder Kombinationen davon besteht, ausgewählt ist.

3. Verpackungslaminat nach Anspruch 1 oder 2, **dadurch gekennzeichnet, daß** die als Barriere gegen saure Verbindungen dienende Schicht (15) einen Scavenger für saure Verbindungen enthält.

4. Verpackungslaminat nach einem der vorhergehenden Ansprüche, **dadurch gekennzeichnet, daß** die Dicke der als Barriere gegen saure Verbindungen dienenden Schicht (15) zwischen 5 und 25 µm, vorzugsweise zwischen 7 und 20 µm und noch weiter bevorzugt zwischen 10 und 15 µm liegt.

5. Verpackungslaminat nach einem der vorhergehenden Ansprüche, **dadurch gekennzeichnet, daß** die als Barriere gegen saure Verbindungen dienende Schicht (15) direkt an die Aluminiumfolie (14) gebunden ist, gegebenenfalls über eine dazwischen liegende Verbindungsschicht (16).

6. Verpackungslaminat nach einem der vorhergehenden Ansprüche, **dadurch gekennzeichnet, daß** die erste äußere flüssigkeitsundurchlässige Beschichtung (12) auf Basis von Polypropylen auf der Innenseite des Verpackungslaminats eine Dicke zwischen 20 und 60 µm und vorzugsweise zwischen 25 und 40 µm aufweist.

7. Verpackungslaminat nach einem der vorhergehenden Ansprüche, **dadurch gekennzeichnet, daß** die zweite äußere flüssigkeitsundurchlässige Beschichtung (13) auf Basis von Polypropylen auf der Außenseite des Verpackungslaminats eine Dicke zwischen 30 und 50 µm und vorzugsweise zwischen 33 und 45 µm aufweist.

8. Verpackungslaminat nach einem der vorhergehenden Ansprüche, **gekennzeichnet durch** eine dritte Schicht (17) auf Basis von Polypropylen zwischen der Kernschicht (11) und der Aluminiumfolie (14), wobei die dritte Schicht (17) auf Basis von Polypropylen vorzugsweise direkt auf der Kernschicht (11) angeordnet ist und vorzugsweise eine Dicke zwischen 5 und 20 µm und noch weiter bevorzugt zwischen 8 und 16 µm aufweist.

9. Verpackungslaminat nach einem der vorhergehenden Ansprüche **gekennzeichnet durch** eine zusätzliche Schicht (21), die als Gasbarriere zwischen der Kernschicht (11) und der Aluminiumfolie (14) dient, wobei die als Gasbarriere dienende zusätzliche Schicht (21) über eine dazwischen liegende Verbindungsschicht (19) direkt an die Aluminiumfolie (14) gebunden ist.

10. Verpackungslaminat nach Anspruch 9, **dadurch gekennzeichnet, daß** die mindestens eine als Gasbarriere dienende zusätzliche Schicht (21) aus einem Material, das aus der Gruppe, die im wesentlichen aus Polyethylenterephthalat (PET), amorphem Polyethylenterephthalat (APET), Cyclolefin-Copolymeren (COC), Polyamid (PA), amorphem Polyamid (APA), flüssigkristallinen Polymeren (LCP), Ethylen-Vinylalkohol-Copolymer (EVOH) und Polyvinylalkohol (PVOH) besteht, ausgewählt ist, besteht.

11. Verpackungslaminat nach Anspruch 9, **dadurch gekennzeichnet, daß** die Dicke der mindestens einen als Gasbarriere dienenden zusätzlichen Schicht (21) zwischen 5 und 20 µm und vorzugsweise zwischen 5 und 15 µm liegt.

12. Verpackungsbehälter, **dadurch gekennzeichnet, daß** er aus einem Verpackungslaminat (10, 10a) nach einem der vorhergehenden Ansprüche durch Falten gebildet, mit einem Lebensmittel befüllt und versiegelt wird.

13. Verfahren bei der Herstellung eines Verpackungsbehälters mit aus Lebensmitteln bestehendem Inhalt, wobei der Verpackungsbehälter eine lange Haltbarkeit aufweist, **dadurch gekennzeichnet, daß** man einen Verpackungsbehälter nach Anspruch 12 durch Retortieren behandelt.

14. Verfahren bei der Herstellung eines Verpackungsbehälters mit aus Lebensmitteln bestehendem Inhalt, wobei der Verpackungsbehälter eine lange Haltbarkeit aufweist, **dadurch gekennzeichnet, daß** man das Einfüllen des Lebensmittels in einen Verpackungsbehälter nach Anspruch 12 bei mindestens 80°C, aber weniger als 100°C durchführt und danach den Verpackungsbehälter versiegelt.

## Revendications

1. Stratifié d'emballage pour un récipient d'emballage stérilisable ou pouvant être rempli à chaud, le stratifié d'emballage (10, 10a) comportant une couche centrale (11) de papier ou de carton, une première couche extérieure étanche aux liquides (12) à base de polypropylène sur l'intérieur du stratifié d'emballage, une deuxième couche extérieure étanche aux liquides (13) à base de polypropylène sur l'extérieur du stratifié d'emballage, une feuille d'aluminium (14) servant de barrière contre les gaz entre la couche centrale (11) et ladite première couche extérieure étanche aux liquides (12) à base de polypropylène, **caractérisé en ce qu'**une couche (15) de matière polymère polaire sert de barrière contre les composés acides et est disposée entre la feuille d'aluminium (14) et ladite première couche extérieure étanche aux liquides (12) à base de polypropylène.

2. Stratifié d'aluminium selon la revendication 1, **caractérisé en ce que** la couche (15) servant de barrière contre des composés acides est choisie parmi le groupe constitué essentiellement du téréphtalate de polyéthylène (PET), du téréphtalate de polyéthylène amorphe (APET), du téréphtalate de polyéthylène orienté (OPET), d'un polyamide (PA), d'un copolymère de polyamide (PA-copolymère), d'un polyamide amorphe (APA), d'un polyamide orienté (OPA), d'un copolymère d'éthylène alcool de vinyle (EVOH), d'un alcool polyvinylique (PVOH) ou de combinaisons de ceux-ci.

3. Stratifié d'emballage selon l'une des revendications 1 et 2, **caractérisé en ce que** la couche (15) servant de barrière contre des composés acides comporte un capteur pour les composés acides.

4. Stratifié d'emballage selon l'une quelconque des revendications précédentes, **caractérisé en ce que** l'épaisseur de la couche (15) servant de barrière contre des composés acides se situe entre 5 et 25 µm, de préférence entre 7 et 20 µm et encore plus préférablement entre 10 et 15 µm.

5. Stratifié d'emballage selon l'une quelconque des revendications précédentes, **caractérisé en ce que** la couche (15) servant de barrière contre des composés acides est directement liée à ladite feuille d'aluminium (14), probablement par l'intermédiaire d'une couche de liaison intercalée (16).

6. Stratifié d'emballage selon l'une quelconque des revendications précédentes, **caractérisé en ce que** ladite première couche extérieure étanche aux liquides (12) à base de polypropylène sur l'intérieur du stratifié d'emballage présente une épaisseur qui se situe entre 20 et 60 µm, de préférence entre 25 et 40 µm.

7. Stratifié d'emballage selon l'une quelconque des revendications précédentes, **caractérisé en ce que** ladite deuxième couche extérieure étanche aux liquides (13) à base de polypropylène sur l'extérieur du stratifié d'emballage présente une épaisseur qui se situe entre 30 et 50 µm, de préférence entre 33 et 45 µm.

8. Stratifié d'emballage selon l'une quelconque des revendications précédentes, **caractérisé par** une troisième couche (17) à base de polypropylène située entre ladite couche centrale (11) et ladite feuille d'aluminium (14), ladite troisième couche (17) à base de polypropylène étant de préférence disposée directement contre ladite couche centrale (11) et présentant de préférence une épaisseur située entre 5 et 20 µm, et encore plus préférablement entre 8 et 16 µm.

9. Stratifié d'emballage selon l'une quelconque des revendications précédentes, **caractérisé par** une couche supplémentaire (21) servant de barrière contre des gaz entre la couche centrale (11) et la feuille d'aluminium (14), ladite couche supplémentaire (21) servant de barrière contre des gaz étant directement liée à ladite feuille d'aluminium (14) par l'intermédiaire d'une couche de liaison intercalée (19).

10. Stratifié d'aluminium selon la revendication 9, **caractérisé en ce que** ladite au moins une couche supplémentaire (21) servant de barrière contre des gaz est constituée d'un matériau choisi parmi le groupe constitué essentiellement du téréphtalate de polyéthylène (PET), du téréphtalate de polyéthylène amorphe (APET), de copolymères d'oléfine cyclique (COC), d'un polyamide (PA), d'un polyamide amorphe (APA), d'un polymère de cristaux liquides (LCP), d'un copolymère d'éthylène alcool de vinyle (EVOH) et d'un alcool polyvinylique (PVOH).

11. Stratifié d'emballage selon la revendication 9, **caractérisé en ce que** l'épaisseur de ladite au moins une couche supplémentaire (21) servant de barrière contre des gaz se situe entre 5 et 20 µm, de préférence entre 5 et 15 µm.

12. Récipient d'emballage, **caractérisé en ce qu'**il est formé par pliage à partir d'un stratifié d'emballage (10, 10a) selon l'une quelconque des revendications précédentes, lequel récipient est rempli d'un aliment et fermé hermétiquement.

13. Procédé de production d'un récipient d'emballage avec un contenu constitué d'aliments, le récipient d'emballage présentant une longue durée de conservation, **caractérisé en ce qu'**un récipient d'emballage selon la revendication 12 est traité par stérilisation.

14. Procédé de production d'un récipient d'emballage avec un contenu constitué d'aliments, le récipient d'emballage présentant une longue durée de conservation, **caractérisé en ce que** le remplissage de l'aliment dans le récipient d'emballage selon la revendication 12 est effectué à au moins 80 °C, mais à moins de 100 °C, après quoi le récipient d'emballage est fermé hermétiquement.
